# FASCICULE DE BREVET EUROPEEN

(11) **EP 1 869 972 B1**
(45) Date de publication et mention de la délivrance du brevet: **27.02.2013**
(21) Numéro de dépôt: 07107360.5
(22) Date de dépôt: 02.05.2007
(51) Int. Cl.: A01G 31/00

(54) **Support végétal pour la culture hors sol des plantes maraîchères et horticoles**
Pflanzlicher Träger zum erdlosen Anbau von Gemüse- und Gartengewächsen
Vegetable support for soilless cultivation of market and horticultural plants

(30) Priorité: 20.06.2006 FR 0605473
(43) Date de publication de la demande: 26.12.2007
(60) Demande divisionnaire: 10158014.0
(73) Titulaire: Nucea Substrate SARL, 33420 Rauzan (FR)
(72) Inventeur: Strelow, Laurent, Vanosc 07690 (FR); Besiers, Jérôme, Fargues Saint Hilaire 33370 (FR)
(74) Mandataire: Ravina, Bernard

(56) Documents cités:
- EP-A- 0 823 988
- EP-A- 1 082 894
- EP-A1- 0 176 134
- EP-A1- 0 277 397
- EP-A1- 0 416 838
- EP-A1- 0 962 129
- WO-A-92/13441
- DE-A1- 19 624 431
- FR-A- 2 546 371
- FR-A1- 2 627 663
- GB-A- 1 409 791
- US-A- 3 877 172
- US-A- 4 777 763

## Description

### Domaine technique

La présente invention se rapporte à un support en matériau végétal utilisable pour la culture sous serre et hors-sol des plantes maraîchères et horticoles.

### Etat de la technique

On connaît l'état de la technique des supports de culture principalement dédiés à la culture hors-sol. Selon cette technique de culture, les supports de culture sont disposés en rang sur un sol profilé recouvert d'un film en matière synthétique pour l'évacuation du drainage ou dans des goulottes horizontales posées au sol ou suspendues à la structure de la serre. Les rangs de culture sont équipés d'un réseau d'irrigation des supports de culture, constitué de tuyaux d'arrosage et de buses ou de systèmes gouttes à gouttes.

Chaque support de culture est habituellement constitué d'un pain en matériau végétal disposé dans un sac en une matière synthétique, opaque à la lumière.

Avant usage, le pain se présente dans un état comprimé. Lors de sa mise en service le pain de culture est irrigué. Sous l'effet de cet apport d'eau, le pain de culture est amené à se dilater et à combler le volume interne du sac.

L'opacité du sac permet de maintenir le système racinaire des plantes à l'abri de la lumière et de reproduire les conditions naturelles de pousse. Le système racinaire se développe dans le pain de culture et le colonise complètement.

Le pain de culture est constitué d'un mélange compacté de fibres et de fragments de noix de coco plus ou moins gros. Ces fragments, en combinaison avec la fibre, déterminent un degré de porosité du pain à l'air et son aptitude à stocker l'eau, cette dernière étant d'autant plus faible que le degré de porosité est élevé.

La demande de brevet FR 2 627 663 divulgue des cubes de substrat présentant un lamage débouchant sur l'une de ses faces et deux rainures débouchantes en extrémités formées sur la face opposée. Le lamage est destiné à former un logement de réception d'un plant et les rainures, de drains d'évacuation d'eau.

La demande de brevet européen 176 134 montre un support de culture de forme parallélépipédique présentant des cavités ouverte sur la face supérieure, destinées à recevoir des jeunes plants et des rainures en face inférieure, débouchantes en extrémités, ces rainures étant soit parallèles, soit entrecroisées.

La demande de brevet WO 9213441 divulgue un pot pour cultiver les plantes, ce pot sous forme de cube présentant des cavités débouchantes sur sa face supérieure destinées à recevoir des plans, l'une des faces latérales du pot étant dotée de perçages pour les racines.

### Divulgation de l'invention

### Problème technique

Le système racinaire de chaque plante, pour un bon développement requiert une aération adéquate et un apport d'eau suffisant et ce sans excès.

Les pains à forte porosité, en raison de leur faible capacité à retenir l'eau, requièrent des apports d'eau fréquents pour couvrir les besoins hydriques de la plante. Les supports de culture dotés de tels pains sont utilisés principalement dans les régions à taux d'humidité élevé ou bien pour les cultures de début de printemps, de fin d'automne ou d'hiver.

L'arrosage fréquent des pains se traduit bien souvent par une stagnation d'eau sous les pains de culture à l'origine d'une dégradation du système racinaire par asphyxie ce qui entraîne le pourrissement des racines.

Les pains de culture à faible porosité présentent une capacité de rétention d'eau importante. Ils conviennent particulièrement pour les régions chaudes par exemple pour les régions du sud de l'Europe ou pour les cultures d'été. En corollaire, le système racinaire des plantes est peu aéré et pour cette raison, peu développé. Cet inconvénient se traduit par une baisse du rendement des plantes.

### Solution technique

La présente invention a pour objet de pallier les inconvénients précédemment cités en mettant en oeuvre un pain de culture dédié à la culture hors-sol qui présente à la fois une bonne capacité de stockage de l'eau qu'une bonne capacité d'aération du système racinaire.

A cet effet, le support de culture selon la présente invention, comprenant notamment un pain de culture sous forme d'un parallélépipède rectangle présentant deux grandes faces horizontales supérieure et inférieure, deux grandes faces latérales droite et gauche et deux faces latérales d'extrémité, ledit support présentant sur l'une au moins de ses grandes faces horizontales prévues pour être au contact des systèmes racinaires des plantes au moins une rainure (10) horizontale ouverte sur les deux faces adjacentes caractérisé en ce que le pain de culture (1) présente sur ses grandes faces verticales des rainures verticales (11).

Chaque rainure permet d'une part l'aération du pain et d'autre part facilite l'évacuation de l'excès d'eau vers le fond du sac et vers les ouvertures de ce dernier.

Il est donc possible d'assurer un arrosage en continu sans risque de stagnation d'eau et d'assurer une bonne aération du pain de culture afin de favoriser la pousse et le développement racinaire.

Selon une autre caractéristique de l'invention, le pain de culture, sur l'une au moins de ses deux grandes faces, supérieure et inférieure, présente des rainures horizontales entrecroisées obliques par rapport à l'axe longitudinal du pain de culture, débouchant dans les faces adjacentes.

Selon une variante d'exécution, le pain de culture sur l'une de ses grandes faces horizontale présente des rainures horizontales perpendiculaires à son axe longitudinal.

Avantageusement, selon un autre aspect de l'invention, les rainures horizontales débouchent dans les rainures verticales.

Il est ainsi formé un réseau de rainures communicantes assurant une bonne aération ainsi qu'une bonne évacuation de l'eau en excès. Par ailleurs il y a lieu de noter que les zones de discontinuités créées par les différentes rainures favorisent, notamment au niveau de leur jonction ou de leur croisement, la division racinaire. Il en résulte un accroissement de la densité du réseau racinaire des plantes.

Selon une autre caractéristique de l'invention, les grandes faces du pain de culture ainsi que les faces des rainures formées, sont recouvertes d'une couche de latex.

Une telle disposition permet de conserver dans le temps le dessin des différentes rainures et éviter leurs destructions notamment par dilatation du pain lors de sa mise en service.

### Brève description des dessins

D'autres avantages, buts et caractéristiques de l'invention apparaîtront à la lecture de la description d'une forme préférée de réalisation, en se référant aux dessins annexés en lesquels :

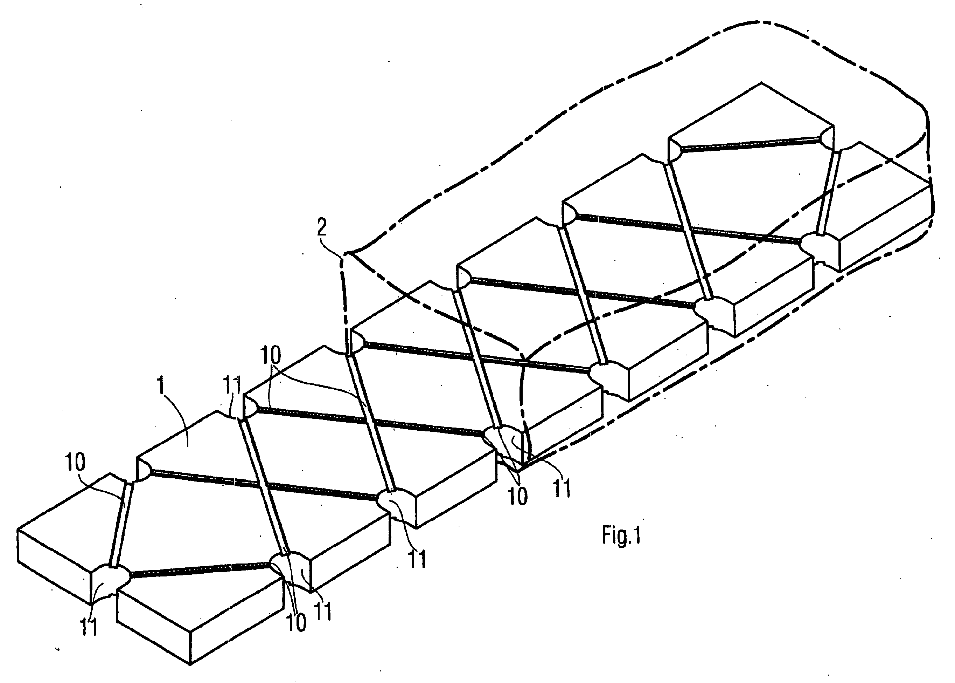

la figure 1 est une vue en perspective, en écorché, d'un support de culture selon l'invention, le sac que comporte ce support étant représenté en trait mixte fort,

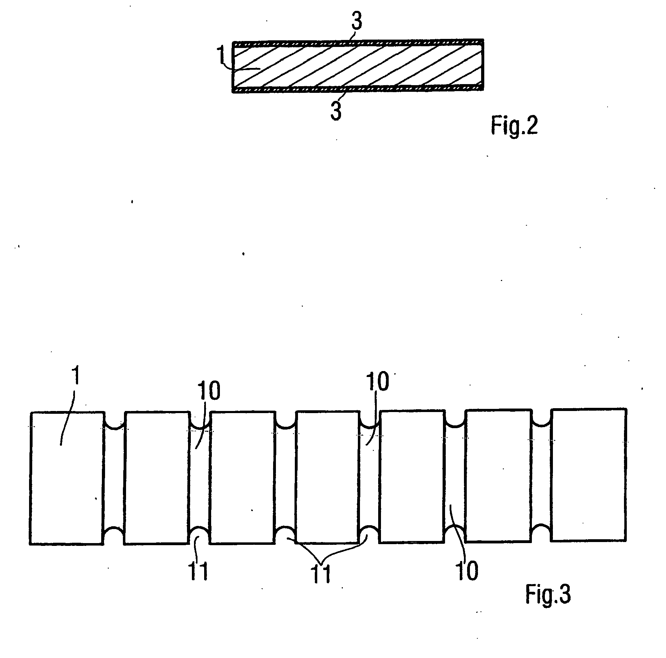

la figure 2 est une vue en coupe du pain de culture,

la figure 3 est une vue de dessous d'un pain de culture selon une autre forme de réalisation.

### Meilleur mode de réalisation de l'invention

Tel que représenté le support de culture selon l'invention pour culture hors sol des plantes maraîchères et horticoles, comprend un pain 1 en matériau végétal et éventuellement un sac 2 destiné à contenir le pain de culture et formant gaine autour de ce dernier. La paroi de ce sac pourra être équipée de place en place de fentes traversantes pour faciliter l'évacuation de l'excès d'eau d'arrosage.

Ce support de culture est destiné à être disposé sur un sol profilé recouvert d'un film en matière synthétique pour l'évacuation du drainage ou dans des goulottes horizontales posées au sol ou suspendues à la structure de la serre abritant la culture hors-sol.

Le pain de culture 1, préférentiellement de forme parallélépipédique, est constitué par un mélange de fibre et de fragments de noix de coco. Comme on peut le voir, le pain de culture présente deux grandes faces horizontales, deux grandes faces latérales verticales et deux grandes faces latérales d'extrémité.

Avant utilisation, le pain de culture 1 se présente sous un état comprimé. En vue de son utilisation, le pain de culture est imbibé d'eau ce qui provoque sa dilation dans le sac 2.

Le sac 2 est réalisé en une matière synthétique étanche à la lumière. Ce sac présente de place en place, le long de ses deux flancs, une série d'encoches d'aération et d'évacuation de l'excès d'eau d'arrosage vers la goulotte support.

Conformément à l'invention, le pain de culture 1 sur l'une au moins de ses faces prévue pour être au contact du système racinaire de la plante, présente au moins une rainure ouverte au moins à l'une de ses deux extrémités. Préférentiellement, la rainure sera ouverte à ses deux extrémités. Cette rainure débouchera dans les deux faces adjacentes.

Selon une première forme de réalisation, le pain de culture sur l'une de ses deux grandes faces horizontales, ou sur ses deux faces à la fois, présente une série de rainures 10 entrecroisées, obliques par rapport à l'axe longitudinal du pain et les deux grandes faces verticales du pain sont creusées de rainures verticales 11 régulièrement espacées. On peut voir que les rainures 10 débouchent dans les rainures verticales 11, le fond de chacune de ces rainures constituant une partie de la face adjacente correspondante.

À titre d'exemple purement indicatif les rainures 10 présentent une profondeur comprise entre 1 et 3 cm pour une largeur de l'ordre de 2 cm tandis que les rainures verticales 11 présentent une profondeur de vingt millimètres pour une largeur de vingt millimètres.

Selon une autre forme de réalisation, les rainures 10 sont formées de manière perpendiculaire à l'axe longitudinal du pain à écartement régulier. Ces rainures débouchent dans les deux faces adjacentes et préférentiellement dans les rainures 11 que ces dernières comportent. Le fond de chaque rainure 11 constitue une partie de la face adjacente correspondante. Ainsi chaque rainure 10 s'étend d'une rainure 11 à une autre située en vis-à-vis. Selon une forme préférée de réalisation, la largeur de chaque rainure 10 est égale à la largeur de chaque rainure 11.

Préférentiellement ces rainures sont ménagées dans une seule des grandes faces du pain de culture.

Avantageusement, au moins les grandes faces du pain de culture 1 ainsi que les faces des rainures 10, 11 formées dans le pain, sont recouvertes d'une couche de latex 3. Cette couche de latex 3 a essentiellement pour but d'assurer la cohésion du pain en surface et d'éviter la destruction des rainures.

Le pain de culture est avantageusement réalisé par compression d'une masse fibreuse dans un moule approprié. La compression est avantageusement réalisée à la presse comme connu.

Préférentiellement, les couches de latex sont apposées sur la masse fibreuse avant compression de cette dernière. Ainsi lors de la compression, l'énergie dégagée engendre une fusion superficielle de la couche de latex pour le moins de sa face en contact avec la masse fibreuse, ce qui renforce l'ancrage de la couche de latex au pain de culture et renforce la cohésion de ce dernier.

Il va de soi que la présente invention peut recevoir tous aménagements et variantes du domaine des équivalents techniques sans pour autant sortir du cadre du présent brevet tel que défini par les revendications.

## Revendications

1. Support de culture comprenant notamment un pain de culture sous forme d'un parallélépipède rectangle présentant deux grandes faces horizontales supérieure et inférieure, deux grandes faces latérales droite et gauche et deux faces latérales d'extrémité, ledit support présentant sur l'une au moins de ses grandes faces horizontales prévues pour être au contact des systèmes racinaires des plantes au moins une rainure (10) horizontale ouverte sur les deux faces adjacentes **caractérisé en ce que** le pain de culture (1) présente sur ses grandes faces verticales des rainures verticales (11).

2. Support de culture selon la revendication 1, **caractérisé en ce que** le pain de culture sur les deux grandes faces supérieure et inférieure présente des rainures horizontales (10) entrecroisées, obliques par rapport à l'axe longitudinal du pain de culture, débouchant dans les faces adjacentes.

3. Support de culture selon la revendication 1, **caractérisé en ce que** le pain de culture sur l'une de ses grandes faces horizontale présente des rainures horizontales (10) perpendiculaires à son axe longitudinal.

4. Support de culture selon la revendication 3, **caractérisé en ce que** les rainures horizontales (10) débouchent dans les rainures verticales (11).

5. Support de culture selon l'une quelconque des revendications précédentes, **caractérisé en ce que** les grandes faces du pain et les faces des rainures horizontales et verticales (10, 11), sont recouvertes d'une couche de latex.

6. Support de culture selon l'une quelconque des revendications précédentes, **caractérisé en ce que** le pain de culture est constitué d'un mélange de fibre et de débris de noix de coco.

7. Support de culture selon l'une quelconque des revendications précédentes, **caractérisé en ce qu'**il comprend un sac dans lequel est disposé le pain de culture.

## Claims

1. A cultivation bed comprising in particular a cultivation cake in the form of a rectangular parallelepiped having two top and bottom horizontal large faces, two right and left lateral large faces and two end lateral faces, said bed having, on at least one of its horizontal large faces arranged to be in contact with the root systems of the plants, at least one horizontal groove (10) open on the two adjacent faces, **characterised in that** the cultivation cake (1) has vertical grooves (11) on its vertical large faces.

2. A cultivation bed according to claim 1, **characterised in that** the cultivation cake, on the two top and bottom large faces, has intersecting horizontal grooves (10) oblique with respect to the longitudinal axis of the cultivation cake, emerging in the adjacent faces.

3. A cultivation bed according to claim 1, **characterised in that** the cultivation cake, on one of its horizontal large faces, has horizontal grooves (10) perpendicular to its longitudinal axis.

4. A cultivation bed according to claim 3, **characterised in that** the horizontal grooves (10) emerge in the vertical grooves (11).

5. A cultivation bed according to any one of the preceding claims, **characterised in that** the large faces of the cake and the faces of the horizontal and vertical grooves (10, 11) are covered with a layer of latex.

6. A cultivation bed according to any one of the preceding claims, **characterised in that** the cultivation cake comprises a mixture of fibre and coconut debris.

7. A cultivation bed according to any one of the preceding claims, **characterised in that** it comprises a bag in which the cultivation cake is placed.

## Patentansprüche

1. Bepflanzungsträger umfassend insbesondere einen Bepflanzungskuchen in Form eines rechteckigen Parallelepipeds, der eine obere und eine untere große Horizontalseite, eine rechte und eine linke große Lateralseite und zwei laterale Endseiten aufweist, wobei der Bepflanzungsträger an mindestens einer seiner großen Horizontalseiten, welche dazu dienen, in Kontakt mit Wurzelsystemen von Pflanzen zu stehen, mindestens eine horizontale Rille (10) aufweist, die an den benachbarten Seiten offen ist, **dadurch gekennzeichnet, dass** der Bepflanzungskuchen (1) an seinen großen Vertikalseiten vertikale Rillen (11) aufweist.

2. Bepflanzungsträger nach Anspruch 1, **dadurch gekennzeichnet, dass** der Bepflanzungskuchen an der großen oberen und der großen unteren Seite sich kreuzende horizontale Rillen (10) aufweist, welche gegenüber der Längsachse des Bepflanzungskuchens geneigt sind und in die gegenüberliegenden Seiten münden.

3. Bepflanzungsträger nach Anspruch 1, **dadurch gekennzeichnet, dass** der Bepflanzungskuchen an einer seiner großen Horizontalseiten horizontale Rillen (10) aufweist, welche im rechten Winkel zu seiner Längsachse stehen.

4. Bepflanzungsträger nach Anspruch 3, **dadurch gekennzeichnet, dass** die horizontalen Rillen (10) in die vertikalen Rillen (11) münden.

5. Bepflanzungsträger nach einem der vorstehenden Ansprüche, dadurch gekennz e i c h n e t , dass die großen Seiten des Kuchens und die Flächen der horizontalen und vertikalen Rillen (10,11) mit einer Latexschicht überzogen sind.

6. Bepflanzungsträger nach einem der vorstehenden Ansprüche, dadurch g e k e n n - z e i c h n e t , dass der Bepflanzungskuchen aus einer Mischung aus Faser und zerkleinerten Kokosnüssen gebildet ist.

7. Bepflanzungsträger nach einem der vorstehenden Ansprüche, dadurch g e k e n n - zeichnet, dass er einen Beutel umfasst, in dem der Bepflanzungskuchen angeordnet ist.
